Europäisches Patentamt

European Patent Office

Office européen des brevets

(19)

(11) Publication number: **0 342 275**

**A1**

(12) # EUROPEAN PATENT APPLICATION

(21) Application number: **88200960.8**

(22) Date of filing: **13.05.88**

(51) Int. Cl.4: **G01N 3/32**

(43) Date of publication of application:
**23.11.89 Bulletin 89/47**

(84) Designated Contracting States:
**AT BE CH DE ES FR GB GR IT LI LU NL SE**

(71) Applicant: **STAMICARBON B.V.**
**Mijnweg 1**
**NL-6167 AC Geleen(NL)**

(72) Inventor: **Pfletschinger, Elmar**
**Via Prudenziana 10**
**Como(IT)**

(54) **Fatigue testing machine.**

(57) The invention relates to a fatigue testing machine comprising
- means (3, 3') for clamping a sample (6) on which forces can be applied, which force results in bending of the sample (6), the amount of bending defines an amount of deflexion
- means (2) for applying a predefined force with a frequency in between 0.1-20 Hz
- means for measuring the applied force, the frequency and the deflexion together with means for a feed-back mechanism to controll the accuracy of the applied force, wherein the means for applying forces comprise
- an elastic element (13), larger than the to be tested sample (6) and a mass (13'), which form a mechanical oscilator with an own frequency in between 0.1-20 Hz, which oscilator can conserve the main part of the energy during testing of a sample.

EP 0 342 275 A1

# FATIGUE TESTING MACHINE

The invention relates to a fatigue testing machine comprising
- means for clamping a sample on which forces can be applied, which force results in bending of the sample, the amount of bending defines an amount of deflexion.
- means for applying predefined forces with a frequency between 0.1-20 Hz.
- means for measuring the applied force, the frequency and the deflexion together with means for a feed-back mechanism to controll the accuracy of the applied force.

Above described fatigue testing machines are known in the art. The means for applying forces generally consist of a relatively heavy engin with a power in the order of kilowatts in order to achieve the necessary force applicable onto the to be tested rod. In order to measure, relatively complete and precise, fatigue characteristics of materials (Wöhler curves) measurements are required at different force, taking the sample to destruction. Thus those measurements are time consuming and can take 1-3 month. State of the art cheap testing machines appear to drift in the force applied. The drift appears to be 2 á 3 % over 3 month, although during a short period, the accuracy of the applied force is within 0,1%.

The invention solves the problem of the drift, which should be for the measurement of complete Wöhler curves at least within 1%, preferably within 0,5%.

The solution according the invention provides a fatigue testing machine in which the means for applying forces comprise an elastic element, larger than the to be tested sample, and a mass, which form a mechanical oscilater with an own frequency in between 0.1-20 Hz, which oscilator can conserve the main part of the energy during testing of a sample.

The engine, necessary to generate the forces to be applied on the to be tested rod, can be very much lighter. Good results are achieved using an engine with a power of only 10-15 W.

The lower energy consumption results in a stable processing, which is easy to controll without high costs. Thus the main difference between state of the art fatigue testing machines and the one according to the invention is that in the former the large amount of energy, which is needed to deform the sample is lost in every load cycle, whereas it is recovered in the machine according the invention. This means that the power to be put into the machine and to be controlled by a feed back mechanism, is smaller by a factor in the range 100 to 1000.

The invention also relates to a process for measuring fatigue characteristics of a sample by
- clamping a sample in a fatigue testing machine,
- applying a force on the sample, which force results in bending of the sample, the amount of bending defines an amount of deflexion which force is applied in a predefined magnitude with a frequency in between 0.1-20 Hz
- measuring the applied force, the frequency and the deflexion while running a feed-back mechanism to controll the accuracy of the applied force,
characterized in that when applying the force in a cyclic way in each cycle the main part of the energy is conserved for a following cycle.

It is advantageous to connect the machine with a computer for an automatic control on drifting and an automatic processing of measurements.

The spring can be e.g. a leaf spring, or a coil spring.

The engine, used to generate the oscilating forces can be e.g. electromagnetic or pneumatic.

The forces applied to a sample are of a sinus like nature and are normally in between $10^3$-$10^5$ Newton but this is in no way restrictive. These forces are normally called "dynamic load". Further to the dynamic load, which is sinusoidally, a static load can be applied to the sample, which allows to measure fatigue resistance with any combination of static and dynamic loads. Especially this makes it possible to measure under one side only bending. The machine can be run under imposed load condition which can be held constant or can be varied according to any desired program or the machine can be run with imposed deflection which can be varied as well according to any desired program.

The invention can be applied also in tensile testing machines or other testing machine where an oscilating large force is applied.

The frequency at which the testing is performed has to be lower than the own frequency of the sample and lies normally between 1-5 Hz, especially 1-3 Hz. It is important, that the heat dissipation of the sample is high enough, so that the temperature in the sample remains relatively constant. The frequency of the total system deviates a bit from the own frequency of the oscilator if measured when the spring should be fixed at one end completely. This deviation depends on the sample. It is possible to adjust the frequency by adjusting the weight of the spring. This can be easily done by fixing a weight on a rod, connected to the spring, which weight can be placed along the spring, thus increasing or decreasing the frequency.

The invention will be elucidated by the following schematic figure:

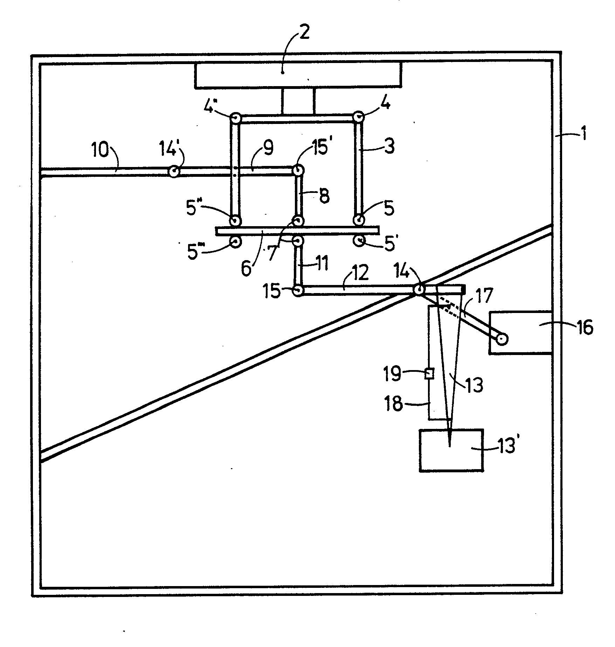

Referring to the figure: (1) is a frame with a load-cel, which comprises means for measuring applied force, and a computer which is used for steering the machine, data gathering etc. Fixed to the load cel (2) are clamps (3) and (3′). The clamps comprise pivot joints (4) and (4′), and pivot joints (5), (5′), (5″), (5‴) to clamp a sample (6). In the middle between clamping points (5-5‴) is the clamping point (7) for the oscilator. In order to get a linear translation during fatigue testing, clamping point (7) is bound on one side via shafts (8) and (9) to a part of the frame (10). On the other side, the point (7) is bound via shafts (11) and (12) to the mechanical oscilator (13). Shaft (11) is equally long to shaft (8) and shaft (12) is equally long to shaft (9). Shaft (12) is to be seen as the shaft between pivot joints (14) and (15), which has the counter parts in joints (14′) and (15′). Pivot joint (14) is, just as joint (14′) fixed to the frame.

The engine (16) puts energy into the system via belt (17).

The mechanical oscilater (13) is much larger than sample (6). The own frequency of the oscilator (13) can be measured by fixing the pivot joint (14). In practice, the own frequency of the total system is a little bit different from the frequency of the oscilator (13) because the sample (6) is part of the total oscilator. Preferably the frequency of the total system is in between 1-5 Hz. If constant frequency to a high accuracy is necessary, the frequency can be adjusted by a weight (18), to be fixed on a certain height along rod (19). If the weight is put on a lower place, the frequency will be lower too. Optionally, this can be guided by the computer.

The machine can be equipped with other clamping devices. The above described clamping is for three point bending. Other clamping can be used for four point (shear free) bending or for tensile and compressive testing.

## Claims

1 Fatigue testing machine comprising
- means for clamping a sample on which forces can be applied, which force results in bending of the sample, the amount of bending defines an amount of deflexion
- means for applying a predefined force with a frequency in between 0.1-20 Hz
- means for measuring the applied force, the frequency and the deflexion together with means for a feed-back mechanism to controll the accuracy of the applied force,
characterised in that the means for applying forces comprise - an elastic element, larger than the to be tested sample and a mass, which form a mechanical oscilator with an own frequency in between 0.1-20 Hz, which oscilator can conserve the main part of the energy during testing of a sample.

2. Fatigue testing machine according to claim 1 comprising a frame (1),
- means (3, 3′) for clamping a sample (6) on which forces can be applied, which force results in bending of the sample, the amount of bending defines an amount of deflexion
- means for applying a predefined force with a frequency in between 1-5 Hz.
- means (2) for measuring the applied force, the frequency and the deflexion together with means for a feed-back mechanism to controll the accuracy of the applied force.
characterised in that the means for applying forces comprise an engine (16), an elastic element (13), larger than the to be tested sample, and a mass (13′), which element and mass form a mechanical oscilator together with the sample (6), which oscilator has an eigen frequency in between 1-5 Hz, and can conserve the main part of the energy during testing of a sample, which means for applying forces furthermore comprise shafts (8), (9), (11) (12) for appling a linear translation at the sample (6) at clamping points (7) and (7′).

3. Process for measuring fatigue characteristics of a sample by
- clamping a sample in a fatigue testing machine
- applying a force on the sample, which force results in bending of the sample, the amount of bending defines an amount of deflexion, which force is applied in a predefined magnitude with a frequency in between 0.1-20 Hz
- measuring the applied force, the frequency and the deflexion while running a feed-back mechanism to controll the accuracy of the applied force,
characterized in that when applying the force in a cyclic way in each cycle the main part of the energy is conserved for a following cycle.

4. Fatigue testing machine and process as substantially described in the description, and the figure.

5475

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | STRAIN vol. 18, no. 4, November 1982, pages 149-159; J.E. BUTLER et al.: "Assessing the deterioration of plain and fibrous concrete subjected to flexural fatigue" * page 150, column 1 * | 1 | G 01 N 3/32 |
| A | PATENT ABSTRACTS OF JAPAN vol. 8, no. 65 (P-263)(1502), 27th March 1984; & JP - A - 58 211 626 (SAGINOMIYA SEISAKUSHO K.K.) 09-02-1983 | 2 | |

TECHNICAL FIELDS SEARCHED (Int. Cl.3)

G 01 M 7/00
G 01 N 3/00

The present search report has been drawn up for all claims

| Place of search | Date of completion of the search | Examiner |
|---|---|---|
| BERLIN | 22-12-1988 | DIETRICH A. |